(19) Europäisches Patentamt
European Patent Office
Office européen des brevets

(11) **EP 1 773 016 A1**

(12) **EUROPÄISCHE PATENTANMELDUNG**

(43) Veröffentlichungstag:
**11.04.2007 Patentblatt 2007/15**

(51) Int Cl.:
*H04L 27/30* *(2006.01)*

(21) Anmeldenummer: 05021717.3

(22) Anmeldetag: **05.10.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **SIEMENS AKTIENGESELLSCHAFT**
**80333 München (DE)**

(72) Erfinder:
 • **Döttling, Martin, Dr.**
  **85579 Neubiberg (DE)**
 • **Gerlach, Heino**
  **81675 München (DE)**
 • **Halfmann, Rüdiger**
  **67697 Otterberg (DE)**

 • **Hindelang, Thomas**
  **82256 Fürstenfeldbruck (DE)**
 • **Klein, Axel**
  **81737 München (DE)**
 • **Krause, Jörn, Dr.**
  **12107 Berlin (DE)**
 • **Lobinger, Andreas**
  **83714 Miesbach (DE)**
 • **Michel, Jürgen, Dr.**
  **81737 München (DE)**
 • **Raaf, Bernhard**
  **82061 Neuried (DE)**
 • **Zirwas, Wolfgang**
  **82194 Gröbenzell (DE)**
 • **Viering, Ingo, Dr.**
  **81539 München (DE)**

(54) **Verfahren und Vorrichtung zur Versendung von Organisationsinformationen in einem Mehrträgerkommunikationssystem**

(57) Die Erfindung betrifft ein Verfahren zur Übertragung von Informationen (ORG) von einem Sender (BS) zu einem Empfänger (MS) in einem Funkkommunikationssystem, bei dem ein in eine Mehrzahl von Subträgern aufgespaltetes Frequenzband zur Kommunikation verwendet wird. Der Sender (BS) versendet jeweils ein Signal auf zumindest zwei Subträgern, wobei die Informationen (ORG) derart kodiert sind, dass sie empfängerseitig unter Verwendung der Kenntnis der Frequenzlagen der zumindest zwei Subträger in Kombination mit der Kenntnis des Phasendifferenzen zwischen den zumindest zwei Signalen ermittelbar sind. Weiterhin betrifft die Erfindung einen Sender (BS) und einen Empfänger (MS) zur Durchführung des Verfahrens.

# FIG 3

**Beschreibung**

Die Erfindung betrifft ein Verfahren zur Übertragung von Informationen von einem Sender zu einem Empfänger in einem Funkkommunikationssystem, bei dem ein in eine Mehrzahl von Subträgern aufgespaltetes Frequenzband zur Kommunikation verwendet wird.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen Sender und Empfänger übertragen. Bei den Funkstationen kann es sich hierbei je nach konkreter Ausgestaltung des Funkkommunikationssystems um verschiedenartige teilnehmerseitige Funkstationen oder netzseitige Funkeinrichtungen wie Repeater, Funkzugangspunkte oder Basisstationen handeln. In einem Mobilfunkkommunikationssystem handelt es sich bei zumindest einem Teil der teilnehmerseitigen Funkstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Um eine möglichst effiziente Übertragung von Daten zu erreichen, zerlegt man das gesamte zur Verfügung stehende Frequenzband in mehrere Subträger (Multicarrier- bzw. Mehrträgerverfahren). Die den Mehrträgersystemen zugrunde liegende Idee ist es, das Ausgangsproblem der Übertragung eines breitbandigen Signals in die Übertragung mehrerer schmalbandiger Signale zu überführen. Dies hat unter anderem den Vorteil, dass die am Empfänger erforderliche Komplexität reduziert werden kann. Ferner ermöglicht die Aufteilung der verfügbaren Bandbreite in mehrere schmalbandige Subträger eine deutlich höhere Granularität der Datenübertragung hinsichtlich der Verteilung der zu übertragenden Daten auf die unterschiedlichen Subträger, d.h. die Funkressourcen können mit einer großen Feinheit auf die zu übertragenden Daten bzw. auf die Teilnehmerstationen verteilt werden. Insbesondere bei Übertragungen mit variabler Datenrate oder bei bustartigem Datenverkehr kann die Verfügbare Bandbreite durch die Zuweisung einer Anzahl von Subträgern an unterschiedliche Teilnehmerstationen effizient ausgenutzt werden.

Ein Beispiel für ein Mehrträgerübertragungsverfahrens ist ein OFDM (Orthogonal Frequency Division Multiplexing) System, bei welchem für die Subträger zeitlich annähernd rechteckige Pulsformen verwendet werden. Der Frequenzabstand der Subträger wird derart gewählt, dass im Frequenzraum bei derjenigen Frequenz, bei welcher das Signal eines Subträgers ausgewertet wird, die Signale der anderen Subträger einen Nulldurchgang aufweisen. Somit sind die Subträger orthogonal zueinander. Durch den meist sehr geringen Abstand der Subträger und der Schmalbandigkeit der auf den einzelnen Subträgern übertragenen Signale OFDM soll gewährleistet werden, dass die Übertragung innerhalb der einzelnen Subträger im Allgemeinen nicht frequenzselektiv ist. Dies vereinfacht am Empfänger die Signalentzerrung.

Der Erfindung liegt die Aufgabe zugrunde, effiziente Verfahren zur Übertragung von Informationen in einem Funkkommunikationssystem vorzustellen, wobei für die Kommunikation ein in mehrere Subträger aufgespaltetes Frequenzband verwendet wird. Weiterhin sollen ein Sender und ein Empfänger zur Durchführung der Verfahren vorgestellt werden.

Diese Aufgabe wird durch ein Verfahren mit den Merkmalen des Anspruchs 1, sowie durch ein Verfahren und Vorrichtungen mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren zur Übertragung von Informationen von einem Sender zu einem Empfänger in einem Funkkommunikationssystem wird ein in eine Mehrzahl von Subträgern aufgespaltetes Frequenzband zur Kommunikation verwendet. Der Sender sendet auf zumindest zwei Subträgern jeweils ein Signal. Die Informationen sind derart kodiert, dass sie empfängerseitig unter Verwendung der Kenntnis der Frequenzlagen der zumindest zwei Subträger in Kombination mit der Kenntnis des Phasenverhältnisses zwischen den zumindest zwei Signalen ermittelbar sind.

Bei dem Sender kann es sich an sich um eine beliebig ausgestaltete Funkstation handeln, vorzugsweise handelt es sich hierbei um eine netzseitige Funkstation des Funkkommunikationssystems. Zur Kommunikation wird ein Mehrträgerverfahren wie z.B. OFDMA oder IFDMA (Interleaved Frequency Division Multiple Access) eingesetzt. Bei der erfindungsgemäßen Übertragung von Informationen kann es sich um eine dedizierte Übertragung von dem Sender an den Empfänger oder auch um eine Übertragung von dem Sender an eine Mehrzahl von Empfängern handeln.

Die Informationen werden in kodierter Form übertragen. Dies bedeutet, dass eine Kodiervorschrift existiert, welche der Sender vor Versendung der Informationen anwendet, und welche dem Empfänger bekannt ist, so dass dieser eine Dekodierung der Informationen vornehmen kann. Die verwendete Kodiervorschrift betrifft zumindest u.a. die Frequenzlagen von zumindest zwei Subträgern und das Phasenverhältnis der auf diesen beiden Subträgern gesendeten Signale. Zur Dekodierung benötigt der Empfänger demnach Kenntnisse über diese Frequenzlagen und dieses Phasenverhältnis, welche er durch Messungen an den empfangenen Signalen erlangen kann. Die Frequenzlagen können sich hierbei auf die absolute Frequenzlage der Subträger oder auf die Lage der Subträger innerhalb des Frequenzbandes beziehen, und/oder auf die relative Frequenzlage der Subträger zueinander, d.h. auf die Frequenzabstände der Subträger. Das Phasenverhältnis der Signale gibt an, ob bzw. um wie viel die Phase eines Signals gegenüber der Phase des anderen Signals verschoben ist.

Die Erfindung ist auf die Verwendung von zwei oder mehr Subträgern zur Kodierung der Informationen anwendbar.

Es ist möglich, dass die Informationen ausschließlich aus den Kenntnissen über die Frequenzlagen und über das Phasenverhältnis ermittelbar sind, oder auch, dass weitere Kenntnisse hierfür benötigt werden, wie z.B. Kenntnisse des Amplitudenverhältnisses zwischen den zumindest zwei Signalen und/oder Kenntnisse der Anzahl der zumindest zwei Subträger.

In Weiterbildung der Erfindung steht dem Sender zur Übertragung der Informationen ein Teil des Frequenzbandes zur Verfügung, wobei die zumindest zwei Subträger eine Teilmenge des Teils des Frequenzbandes darstellen. Der Sender verwendet die nicht zur Versendung der zumindest zwei Signale verwendeten Subträger des Teils des Frequenzbandes nicht zur Signalversendung. Er wählt somit aus einer Mehrzahl von ihm zur Verfügung stehenden Subträgern eine Teilmenge zur Signalversendung aus, wobei diese Auswahl unter Berücksichtigung der zu übertragenden Informationen bzw. der Kodiervorschriften für die zu übertragenden Informationen erfolgt. Die ausgewählte Teilmenge wird zur Versendung der Informationen genutzt, die nicht ausgewählten Subträger hingegen nicht.

Vorteilhaft ist es, wenn das Verfahren zusätzlich von einem anderen Sender zur Versendung von anderen Informationen durchgeführt wird, wobei dem Sender zur Übertragung der Informationen ein Teil des Frequenzbandes und dem anderen Sender zur Übertragung der anderen Informationen ein anderer Teil des Frequenzbandes zur Verfügung stehen. Dieses Zur-Verfügung-Stehen des Teils und des anderen Teils des Frequenzbandes und die Übertragung der Informationen und der anderen Informationen kann gleichzeitig oder nacheinander stattfinden. Die beiden Teile des Frequenzbandes unterscheiden sich, vorzugsweise weisen sie keine Überlappungen auf, so dass die Signale, welche die Informationen und die anderen Informationen übermitteln, bei gleichzeitiger Versendung nicht miteinander interferieren. Die beiden Teile des Frequenzbandes bestehen vorzugsweise jeweils aus benachbarten Subträgern, wobei sie gleich viele Subträger enthalten können. Das in Bezug auf zwei Sender beschriebene Vorgehen kann auch auf eine größere Anzahl von Sendern angewandt werden, unter welche das Frequenzband aufgeteilt wird.

Bei dem zweiten erfindungsgemäßen Verfahren zur Übertragung von Informationen von einem Sender zu einem Empfänger in einem Funkkommunikationssystem wird ein in eine Mehrzahl von Subträgern aufgespaltetes Frequenzband zur Kommunikation verwendet. Der Empfänger empfängt jeweils ein Signal auf zumindest zwei Subträgern und ermittelt die Informationen unter Verwendung der Kenntnis der Frequenzlagen der zumindest zwei Subträger in Kombination mit der Kenntnis des Phasenverhältnisses zwischen den zumindest zwei Signalen. Die obigen Erläuterungen hinsichtlich des zuerst beschriebenen erfindungsgemäßen Verfahrens sind entsprechend auch auf das zweite erfindungsgemäße Verfahren anwendbar.

Vorteilhaft ist es, wenn der Empfänger zumindest eines der zumindest zwei Signale außer zur Ermittlung der Informationen zur Zeit- und zur Frequenzsynchronisation verwendet.

Einer Weiterbildung der Erfindung gemäß werden Zuordnungen zwischen Frequenzlagen der zumindest zwei Subträger in Kombination mit Phasenverhältnissen zwischen den zumindest zwei Signalen einerseits und Informationsgehalten andererseits verwendet. Die Zuordnungen werden senderseitig zur Kodierung und empfängerseitig zur Dekodierung bzw. zur Ermittlung der Informationen eingesetzt.

In Ausgestaltung der Erfindung werden bei den Zuordnungen für verschiedene Frequenzabstände zwischen den zumindest zwei Subträgern verschiedene Anzahlen von Phasenverhältnissen verwendet. D.h. es existiert ein erster Frequenzabstand, welcher in Kombination mit einer ersten Anzahl von Phasenbeziehungen einsetzbar ist, und zumindest ein von dem ersten Frequenzabstand unterschiedlicher Frequenzabstand, welcher in Kombination mit einer anderen als der ersten Anzahl von Phasenbeziehungen einsetzbar ist. Es ist möglich, dass für eine Gruppe von mehreren verschiedenen Frequenzabständen eine erste Anzahl von Phasenbeziehungen möglich ist, und für einen oder mehrere weitere Frequenzabstände eine oder mehrere weitere Anzahlen von Phasenbeziehungen. Mit Vorzug wird für einen ersten Frequenzabstand zwischen den zumindest zwei Subträgern eine erste Anzahl von Phasenverhältnissen verwendet, und für einen zweiten gegenüber dem ersten Frequenzabstand größeren Frequenzabstand eine zweite gegenüber der ersten Anzahl kleinere Anzahl von Phasenverhältnissen. Die Abstimmung der Frequenzabstände auf Anzahlen von erlaubten Phasenbeziehungen ermöglicht es, Korrelationseigenschaften zwischen den Übertragungskanälen der verschiedenen Subträger zu berücksichtigen.

In Ausgestaltung der Erfindung handelt es sich bei der Übertragung der Informationen um eine IFDMA-Übertragung, wobei bei den Zuordnungen zumindest für manche Frequenzabstände zwischen den zumindest zwei Subträgern genau zwei mögliche Phasenverhältnisse verwendet werden. Bei einer IFDMA-Übertragung werden Signale sowohl sender- als auch empfängerseitig gemäß IFDMA verarbeitet. Die Verwendung von genau zwei Phasenverhältnissen erweist sich im Hinblick auf die senderseitige Leistungseffizienz und die empfängerseitige Detektierbarkeit der IFMDA-Signale als vorteilhaft.

Vorteilhaft ist es, wenn bei den Zuordnungen ein maximaler Frequenzabstand zwischen den zumindest zwei Subträgern verwendet wird, welcher von Eigenschaften des Übertragungskanals zwischen Sender und Empfänger abhängt. Dies ermöglicht es, die Kodierung der Informationen an die aktuellen Funkausbreitungsbedingungen anzupassen.

In Ausgestaltung der Erfindung handelt es sich bei den Informationen um Informationen, welche der Empfänger zur Versendung von Nachrichten an den Sender und/oder zur Dekodierung von Nachrichten von dem Sender benötigt, wie z.B. um zellspezifischen Informationen einer Funkzelle eines zellularen Funkkommunikationssystems.

Bei den zumindest zwei Signalen kann es sich mit Vorzug jeweils um eine Schwingung konstanter Phase und Amplitude handeln, d.h. eine nicht phasen- und amplitudenmodulierte Schwingung.

Der erfindungsgemäße Sender weist Mittel auf zum Verwenden von Subträgern eines in eine Mehrzahl von Subträgern aufgespalteten Frequenzbandes zur Kommunikation, sowie Mittel zum Versenden von jeweils einem Signal auf zumindest zwei Subträgern, und Mittel zum Kodieren der Informationen derart, dass sie empfängerseitig unter Verwendung der Kenntnis der Frequenzlagen der zumindest zwei Subträger in Kombination mit der Kenntnis des Phasenverhältnisses zwischen den zumindest zwei Signalen ermittelbar sind.

Der erfindungsgemäße Empfänger weist Mittel auf zum Verwenden von Subträgern eines in eine Mehrzahl von Subträgern aufgespalteten Frequenzbandes zur Kommunikation, sowie Mittel zum Empfangen von jeweils einem Signal auf zumindest zwei Subträgern, und Mittel zum Ermitteln der Informationen unter Verwendung der Kenntnis der Frequenzlagen der zumindest zwei Subträger in Kombination mit der Kenntnis des Phasenverhältnisses zwischen den zumindest zwei Signalen.

Der erfindungsgemäße Sender und der erfindungsgemäße Empfänger eignen sich insbesondere zur Durchführung des jeweiligen erfindungsgemäßen Verfahrens, wobei dies auch auf die Ausgestaltungen und Weiterbildungen zutreffen kann. Hierzu können sie weitere geeignete Mittel aufweisen.

Im folgenden wird die Erfindung anhand eines Ausführungsbeispiels näher erläutert. Dabei zeigen:

Figur 1: einen Ausschnitt aus einem Funkkommunikationssystem,

Figur 2a: eine erste Aufteilung eines Frequenzbandes,

Figur 2b: eine zweite Aufteilung eines Frequenzbandes,

Figur 3: eine Signalübertragung auf einem Teil der Subträger,

Figur 4: eine erste Zuordnung von Subträgerabständen zu Phasenverschiebungen,

Figur 5: eine zweite Zuordnung von Subträgerabständen zu Phasenverschiebungen.

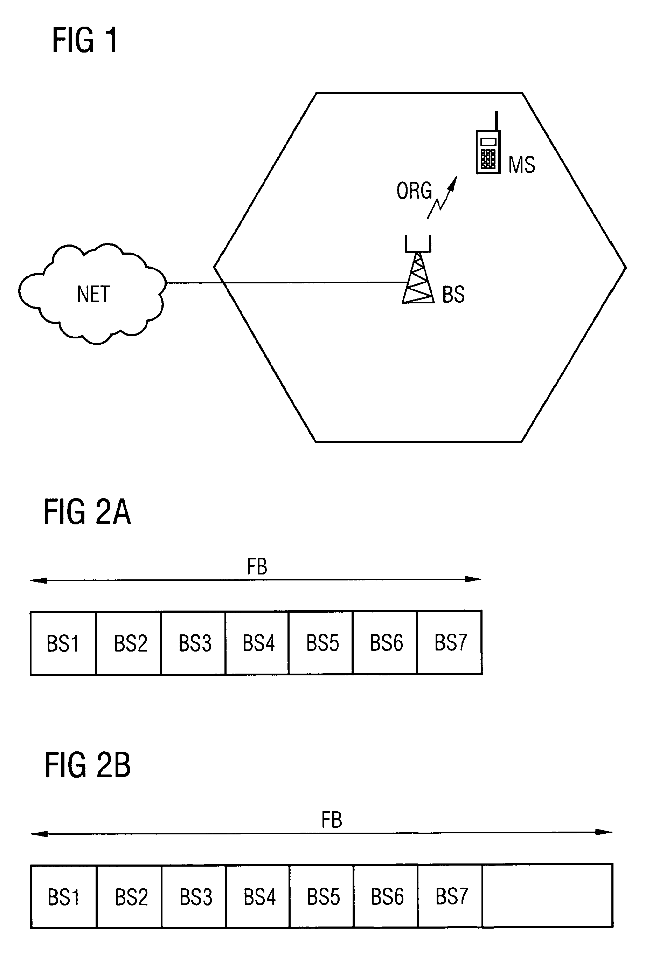

Der in Figur 1 dargestellte Ausschnitt aus einem Funkkommunikationssystem zeigt eine Funkzelle einer Basisstation BS. Diese ist an weitere netzseitige Einrichtungen NET, wie z.B. an eine Einrichtung zur Kontrolle von Basisstationen angebunden. Bei dem betrachteten Funkkommunikationssystem handelt es sich vorzugsweise um ein zellulares System, z.B. nach einem weiterentwickelten UMTS Standard, welches eine Vielzahl von Funkzellen umfasst, wovon der Übersichtlichkeit halber jedoch nur die Funkzelle der Basisstation BS dargestellt ist. Die Basisstation BS kann über Funk mit Teilnelimerstationen innerhalb ihrer Funkzelle kommunizieren, so z.B. mit der Teilnehmerstation MS. Als Funktechnologie wird zumindest für die Abwärtsrichtung, d.h. für die Versendung von Signalen durch die Basisstation BS an Teilnehmerstationen, ein Mehrträgerverfahren wie z.B. OFDM eingesetzt. Hierfür existiert ein Frequenzband, welches in eine Vielzahl von gleich breiten Subträgern aufgeteilt ist.

Die Basisstation BS versendet Organisationsinformationen ORG, welche die Teilnehmerstationen auswerten müssen, bevor eine Kommunikation zwischen der Basisstation BS und der jeweiligen Teilnehmerstation erfolgen kann. Die Organisationsinformationen ORG ermöglichen einer Teilnehmerstation die Frequenz- und die Zeitsynchronisation; außerdem enthalten sie zellspezifische Informationen. Bei den zellspezifischen Informationen kann es sich z.B. um eine oder mehrere der folgenden Größen handeln:

- die Frequenzlage bzw. Subträgerangabe bestimmter Kanäle, wie z.B. eines Synchronisations- und/oder eines Broadcastkanals,
- die Anzahl und Frequenzlage der in der Funkzelle zur Kommunikation zur Verfügung stehenden Subträger,

- der in der Funkzelle verwendete Scrambling Code, mit welchem die Basisstation und Teilnehmerstationen Nachrichten verwürfelt,
- Strukturinformationen betreffend physikalische Kanäle, wie z.B. die Länge eines zyklischen Präfixes von OFDM-Nachrichten,
- Identifikationsinformationen der Funkzelle oder des Funkzellsektors der Basisstation BS,
- allgemeine Signal- und Kanalkonfigurationen.

Die Organisationsinformationen ORG werden z.B. dann benötigt, wenn eine Teilnehmerstation nach derjenigen Basisstation in ihrer Umgebung sucht, zu welcher sie den besten Funkkanal hat. Kommuniziert die Teilnehmerstation aktuell nicht mit einer anderen Basisstation und hat sie keinerlei Informationen betreffend der umgebenden Basisstationen, wie z.B. betreffend die verwendeten scrambling Codes, so wird dieses Suchen als "initial search" bezeichnet.

In den Figuren 2a und 2b ist das in dem Funkkommunikationssystem verwendete Frequenzband FB dargestellt. Das Frequenzband FB wird zum Zweck der Versendung der Organisationsinformationen ORG zwischen den Basisstationen aufgeteilt. Gemäß Figur 2a wird das Frequenzband FB in sieben gleich große Teile aufgeteilt, wobei ein erster Teil einer ersten Basisstation BS1, ein zweiter Teil einer zweiten Basisstation BS2, ein dritter Teil einer dritten Basisstation BS3, ein vierter Teil einer vierten Basisstation BS4, ein fünfter Teil einer fünften Basisstation BS5, ein sechster Teil einer sechsten Basisstation BS6, und ein siebter Teil einer siebten Basisstation BS7 zur Versendung der jeweiligen Organisationsinformationen ORG zur Verfügung steht. Bei den sieben Basisstationen BS1, BS2, BS3, BS4, BS5, BS6 und BS7 handelt es sich um eine Gruppe von benachbarten Basisstationen, bei einer Darstellung der Funkzellen als Sechsecke beispielsweise um eine Basisstation und die sechs ihr direkt benachbarten Basisstationen, deren Funkzellen an die Funkzelle der Basisstation angrenzen. Auf die gleiche Weise werden auch die anderen Basisstationen zu Gruppen zusammengefasst. Die Aufteilung zwischen sieben Basisstationen ist hierbei zwar vorteilhaft, jedoch nur beispielhaft, es können auch andere Gruppengrößen verwendet werden.

Die Aufteilung des Frequenzbandes FB unter die Basisstationen BS1, BS2, BS3, BS4, BS5, BS6 und BS7 hat lediglich für die Versendung der Organisationsinformationen ORG Gültigkeit. Es existiert eine Zeitspanne, welche für die Versendung der Organisationsinformationen ORG durch die Basisstationen vorgesehen ist. Während dieser Zeitspanne ist das Frequenzband FB wie in Figur 2a dargestellt unter den Basisstationen BS1, BS2, BS3, BS4, BS5, BS6 und BS7 aufgeteilt. Die Aufteilung des Frequenzbandes FB bedeutet, dass die einzelnen Teile des Frequenzbandes FB während der Zeitspanne der Versendung der Organisationsinformationen ORG nicht benachbarten Funkzellen zur Verfügung stehen und somit nicht der Frequenzwiederholabstand 1, sondern der Frequenzwiederholabstand von 7 eingesetzt wird. Die Aufteilung des Frequenzbandes FB während der Zeitspanne der Versendung der Organisationsinformationen ORG hat den Vorteil, dass die Signale benachbarter Basisstationen, welche die Organisationsinformationen ORG enthalten, nicht interferieren und somit leichter durch die Teilnehmerstationen detektierbar bzw. einer Basisstation zuordenbar sind.

Die Verwendung des Frequenzbandes FB in Bezug auf die Aufteilung der Funkressourcen zwischen den Basisstationen außerhalb der für die Versendung der Organisationsinformationen ORG verwendeten Zeitspannen kann unterschiedlich gehandhabt werden.

Während in Figur 2a das gesamte Frequenzband FB in sieben gleiche große Teile unterteilt wurde, ist es alternativ hierzu gemäß Figur 2b auch möglich, nur einen Teil des Frequenzbandes FB in sieben gleich große Teile aufzuteilen und den Basisstationen BS1, BS2, BS3, BS4, BS5, BS6 und BS7 zur Versendung der Organisationsinformationen ORG zuzuordnen. Die restliche, in Figur 2b beispielhaft am rechten Rand des Frequenzbandes FB liegende Bandbreite kann für andere Zwecke als die Versendung der Organisationsinformationen ORG verwendet werden.

Gemäß der bisherigen Erläuterungen erfolgt die Versendung der Organisationsinformationen ORG durch die verschiedenen Basisstationen gleichzeitig, wobei zur Trennung der Signale der verschiedenen Basisstationen verschiedene Frequenzbereiche verwendet werden. Zusätzlich oder alternativ zur Trennung der Organisationsinformationen ORG verschiedener Basisstationen im Frequenzbereich ist eine Trennung im Zeitbereich möglich.

Die Frequenzbreite, welche den Basisstationen BS1, BS2, BS3, BS4, BS5, BS6 und BS7 zur Versendung der Organisationsinformationen ORG zur Verfügung steht, hängt von der Breite des Frequenzbandes FB und dem gewünschten Frequenzwiederholabstand ab. Weiterhin kann bei der Entscheidung über die für die Organisationsinformationen ORG zu verwendende Frequenzbreite berücksichtigt werden, dass Teilnehmerstationen existieren können, welche aufgrund der Ausgestaltung ihrer Empfänger nicht in der Lage sind, Signale auf der gesamten Breite des Frequenzbandes FB, sondern lediglich in einem schmaleren Frequenzbereich zu empfangen. Um sicherzustellen, dass jede Teilnehmerstation die Organisationsinformationen ORG aller Basisstationen in ihrer näheren Umgebung abhören kann, ist es vorteilhaft, lediglich die von der in Bezug auf die von ihr empfangbare Bandbreite "schwächsten" Teilnehmerstation empfangbare Bandbreite zu betrachten und diese in sieben gleich große Teile für die Basisstationen BS1, BS2, BS3, BS4, BS5, BS6 und BS7 einzuteilen. Als weiterer Effekt kann berücksichtigt werden, dass am Rand dieser Bandbreite eine Filterung erfolgt, so dass lediglich 90% dieser Bandbreite verwendbar ist. Beträgt die von der schwächsten Teilnehmerstation empfangbare Bandbreite beispielsweise 1,25 MHz, so resultiert aus der Berechnung

$$\frac{0,9 \cdot 1,25 MHz}{7} = 160,7 kHz$$ eine Bandbreite von 160,7 kHz für jede der Basisstationen BS1, BS2, BS3, BS4, BS5, BS6 und BS7 zur Versendung der Organisationsinformationen ORG. Liegt eine Aufteilung des Frequenzbandes FB in Subträger einer Breite von jeweils 15 kHz vor, stehen somit jeder der Basisstationen BS1, BS2, BS3, BS4, BS5, BS6 und BS7 zehn Subträger zur Versendung der Organisationsinformationen ORG zur Verfügung.

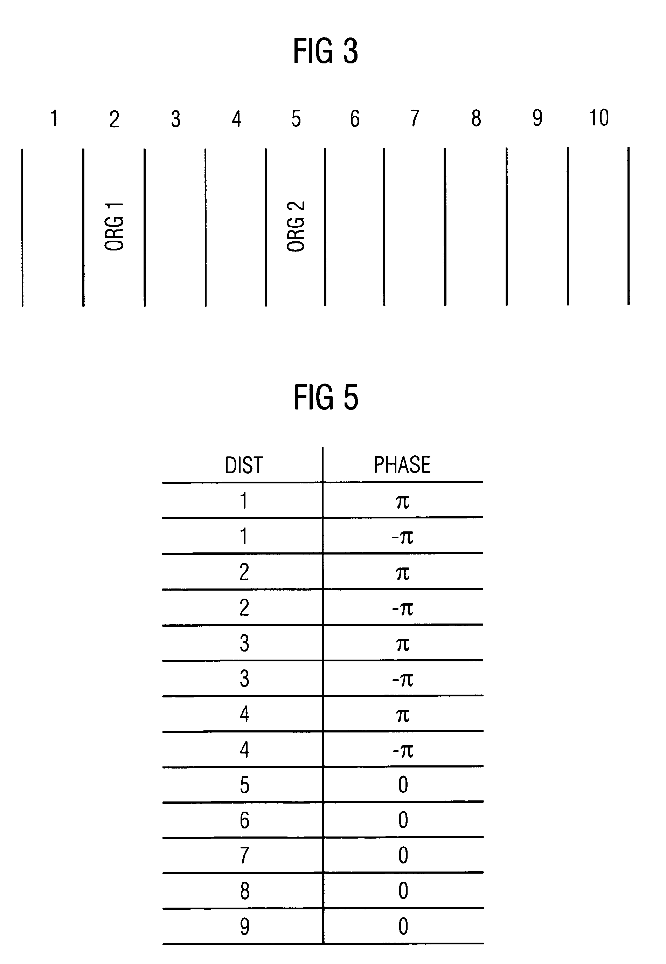

In Figur 3 sind zehn benachbarte Subträger, nummeriert mit den Nummern 1 bis 10, dargestellt, welche einer Basisstation zur Versendung ihrer Organisationsinformationen zur Verfügung stehen. Die Versendung der Organisationsinformationen erfolgt nicht auf allen der Basisstation hierfür zur Verfügung stehenden Subträgern, vielmehr verwendet die Basisstation lediglich eine Teilmenge dieser Subträger zur Versendung der Organisationsinformationen. In Figur 3 ist der Fall dargestellt, dass die Basisstation den Subträger 2 zur Versendung eines ersten Signals ORG 1 verwendet, und den Subträger 5 zur Versendung eines zweiten Signals ORG 2. Es handelt sich bei dieser Übertragung um eine so genannte "double tone" Übertragung. Auf den restlichen Subträgern 1, 3, 4, 6, 7, 8, 9 und 10 werden während der Versendung der Organisationsinformationen keine Signale versendet. Bei den auf den beiden Subträgern 2 und 5 ausgestrahlten Signalen ORG 1 und ORG 2 handelt es sich um Sinusschwingungen, welche an sich keine Informationen tragen, d.h. deren Amplituden sich nicht gemäß einer Amplitudenmodulation mit der Zeit verändern, und deren Phasen sich nicht gemäß einer Phasenmodulation mit der Zeit ändert.

Die Verwendung von lediglich einem Teil der Subträger zur Versendung der Organisationsinformationen weist gegenüber der Verwendung aller hierfür verfügbarer Subträger den Vorteil auf, dass die Organisationsinformationen auf den wenigen Subträgern mit einer höheren Leistung abgestrahlt werden können, wodurch die teilnehmerstationsseitige Detektion erleichtert wird.

Eine Teilnehmerstation detektiert die beiden Signale ORG1 und ORG2. Somit ist ihr bekannt, dass die jeweilige Basisstation einen bestimmten Frequenzbereich zur Versendung ihrer Organisationsinformation verwendet. Aufgrund der Kenntnis dieses Frequenzbereiches kann die Teilnehmerstation unter Verwendung einer Zuordnungstabelle bestimmte Informationen betreffend die Basisstation ermitteln. Bei diesen basisstationsspezifischen Informationen kann es sich z.B. um eine Gruppe von scrambling Codes, deren Bestandteil der von der jeweiligen Basisstation verwendete scrambling Code ist, handeln. In diesem Fall existieren zumindest 7 Gruppen von scrambling Codes, welche wie auch die Frequenzbereiche gemäß den Figuren 2a und 2b unter den Basisstationen BS1, BS2, BS3, BS4, BS5, BS6 und BS7 verteilt werden. Somit kann bereits durch die Zuordnung der Frequenzbereiche für die Organisationsinformationen zu den Basisstationen ein Teil der zellspezifischen Informationen kodiert werden.

Die Teilnehmerstation führt unter Verwendung der Signale ORG1 und ORG2 eine Zeit- und Frequenzsynchronisation in Bezug auf die Basisstation durch. Zur Frequenzsynchronisation stellt sie unter Verwendung der Frequenzlagen der beiden Subträger 2 und 5 ihren Oszillator, welcher der Erzeugung der abzustrahlenden Hochfrequenzsignale dient, ein, so dass die von der Teilnehmerstation verwendeten Subträgerfrequenzen mit denen der Basisstation übereinstimmen. Zur Zeitsynchronisation stellt sie unter Verwendung des Empfangszeitpunktes der Signale ORG1 und ORG2 ihre innere Zeit ein, so dass die von ihr verwendeten Zeitschlitze mit denen der Basisstation übereinstimmen. Zusätzlich zur Zeit- und Frequenzsynchronisation erfolgt eine weitere Auswertung der Signale ORG1 und ORG2 ,um weitere von der Basisstation ausgestrahlte zellspezifische Informationen zu ermitteln. Im folgenden wird beschrieben, auf welche Weise diese Informationen in die beiden Signale ORG1 und ORG2 kodiert werden.

Die beiden Signale ORG1 und ORG2 weisen eine feste, mit der Zeit konstante, Phasenbeziehung zueinander auf. Dies bedeutet, dass auf den beiden Subträgern 2 und 5 an sich die gleichen Schwingungen ausgestrahlt werden, jedoch gegeneinander phasenverschoben. Hierbei ist es günstig, abhängig von dem Abstand der zur Ausstrahlung der Signale ORG1 und ORG2 verwendeten Subträger verschiedene Phasenbeziehungen zuzulassen bzw. verschiedene Modulationsverfahren zu verwenden. Es wird vorgeschlagen, für große Frequenzabstände zwischen den beiden Subträgern keine Phasenverschiebung zu verwenden, für mittlere Abstände Phasenverschiebungen, welche bei einer BPSK-Modulation möglich sind, und bei kleinen Abständen Phasenverschiebungen, welche bei einer QPSK-Modulation möglich sind.

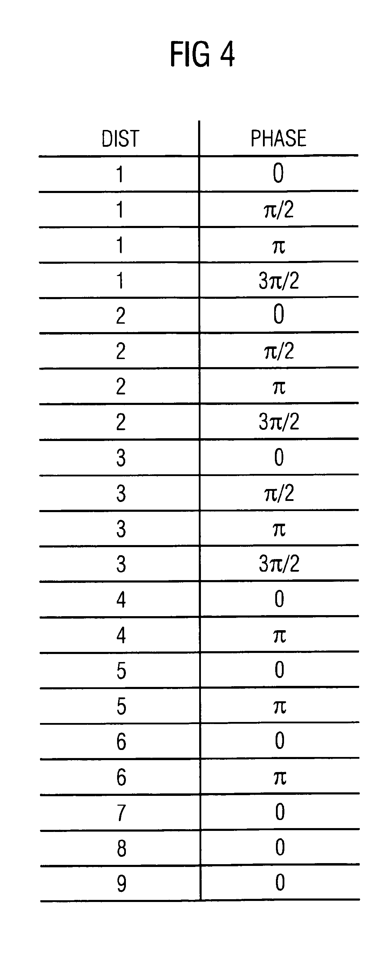

Figur 4 zeigt tabellarisch die möglichen Phasenverschiebungen in Abhängigkeit von dem Abstand der für die Signale ORG1 und ORG2 verwendeten Subträger. Die linke Spalte enthält den Subträgerabstand DIST zwischen den für die Signale ORG1 und ORG2 verwendeten Subträgern, die rechte Spalte die verwendbaren Phasenverschiebungen PHASE. Für die Subträgerabstände DIST von 1, entsprechend der Verwendung benachbarter Subträger, sowie von 2 und 3 wird QPSK verwendet. Dementsprechend kann für die Subträgerabstände DIST von 1, 2 und 3 jeweils eine der Phasendifferenzen PHASE von $0$, $\frac{\pi}{2}$, $\pi$ und $\frac{3\pi}{2}$ zwischen den Signalen ORG1 und ORG2 eingestellt werden. Für die Subträgerabstände DIST von 4, 5 und 6 wird BPSK verwendet. Dementsprechend kann für die Subträgerabstände DIST von 4, 5 und 6 jeweils eine der Phasendifferenzen PHASE von $0$ und $\pi$ zwischen den Signalen ORG1 und ORG2 eingestellt werden. Für die Subträgerabstände DIST von 7, 8 und 9 erfolgt keine Kodierung von Informationen in die Phasenbeziehung der Signale ORG1 und ORG2, so dass hierfür lediglich die Phasendifferenz PHASE 0 möglich ist. Für diejenigen Subträgerabstände DIST von 7, 8 und 9, für welche keine Kodierung von Informationen in die Phasendifferenzen PHASE erfolgt, muss der Empfänger die Phasenbeziehung nicht auswerten. Es ist daher möglich, dass senderseitig die Phasendifferenzen PHASE für die Subträgerabstände DIST von 7, 8 und 9 beliebig eingestellt werden.

Das Zulassen verschiedener Phasendifferenzen in Abhängigkeit vom Abstand zwischen den für die Signale ORG1 und ORG2 verwendeten Subträgern lässt sich wie folgt begründen: während der Signalübertragung über den Funkkanal werden die ausgestrahlten Signale verändert, wobei dies sich u.a. in einer Phasendrehung der Signale äußert. D.h. das empfangene Signal weist eine ungewollte Phasendrehung gegenüber dem gesendeten Signal auf. Diese Drehung ist für zwei Subträger umso ähnlicher, je geringer der Frequenzabstand dieser Subträger ist. D.h. die Kanäle zweier Subträger sind umso korrelierter, je näher sie im Frequenzraum zusammen liegen. Je höher das verwendete Modulationsverfahren und somit je größer die Anzahl der möglichen Phasenbeziehungen ist, desto schwieriger ist bei gegebenem Funkkanal die Detektion der korrekten Phasenbeziehungen. Andererseits ist bei gegebenen Phasenbeziehungen die korrekte Detektion umso schwieriger, je unterschiedlich die Funkkanäle sind. Daher ist es vorteilhaft, die Subträgerabstände und die verwendeten Modulationsverfahren aufeinander abzustimmen.

Zur Abschätzung darüber, welche Anzahlen von Phasenverschiebungen sich für bestimmte Subträgerabstände eignen, kann die Kohärenzbandbreite als ein Maß für die Korrelation zwischen verschiedenen Subträgern herangezogen werden. Betrachtet man beispielsweise einen Kanal mit einer Verzögerungsspreizung (englisch: delay spread) von 3,33 μs, so entspricht die 50% Kohärenzbandbreite ungefähr 60 kHz. Bei einer Subträgerbreite von 15 kHz entspricht dies der Breite von 4 Subträgern. Daraus folgt, dass das QPSK-Modulationsverfahren gemäß Figur 4 zumindest für Subträgerabstände bis zu 3 Subträgern anwendbar sein sollte, und das BPSK-Modulationsverfahren gemäß Figur 4 zumindest für die drei größeren Subträgerabstände bis zu 6 Subträgern.

Der Informationsgehalt IC, welcher anhand der Kodierung gemäß Figur 4 übertragen werden kann, ergibt sich über $IC = \log_2[(9+8+7)\cdot 4+(6+5+4)\cdot 2+(3+2+1)\cdot 1]$ Bits = 7,1 Bits.

Hierbei korrespondiert die 9 der ersten runden Klammer zu dem Subträgerabstand DIST von 1, da es 9 Möglichkeiten gibt, zwei benachbarte Subträger innerhalb von 10 Subträgern anzuordnen. Die 9 der ersten runden Klammer wird mit 4 multipliziert, da für den Subträgerabstand DIST von 1 vier Phasendifferenzen PHASE zugelassen sind. Entsprechend korrespondiert die 8 der ersten runden Klammer zu dem Subträgerabstand DIST von 2, die 7 der ersten runden Klammer zu dem Subträgerabstand DIST von 3, die 6 der zweiten runden Klammer zu einem Subträgerabstand DIST von 4, usw.

Die Teilnehmerstation ermittelt den Subträgerabstand DIST und die Phasenverschiebung PHASE zwischen den Signalen der beiden Subträger. Ihr ist eine Zuordnung zwischen diesen Größen, d.h. zwischen jeder Zeile der Figur 4 und einer zellspezifischen Information bekannt, so dass sie die jeweilige Information aus der Kenntnis des Subträgerabstandes DIST in Kombination mit der Phasenverschiebung PHASE ermitteln kann. Die 7,1 Bits, welche auf diese Weise von der Basisstation zur Teilnehmerstation übertragen werden, können z.B. verwendet werden, um einen zellspezifischen scrambling Code zu signalisieren.

Um ein niedriges PAPR (Peak to Average Power Ratio) bei der Versendung der Organisationsinformationen auf mehreren Subträgern zu erreichen, eignet sich besonders IFDMA (Interleaved Frequency Division Multiple Access), beschrieben z.B. in

- A Filippi, E. Costa, E. Schulz: "Low Complexity Interleaved Sub-carrier Allocation in OFDM Multiple Access Systems", Proc. IEEE VTC'04, Los Angeles, California, USA, September 2004,
- T. Frank, A. Klein, E. Costa, E. Schulz: "Interleaved Orthogonal Frequency Division Multiple Access with Variable Data Rates", OFDM Workshop, Hamburg, 31.8.-1.9. 2005.

Es wird wie bisher der Fall betrachtet, dass für die Übermittlung der Organisationsinformation einer Basisstation zwei Subträger eingesetzt werden. Bei IFDMA liegt in diesem Fall senderseitig eine Folge von zwei komplexen Symbolen z1, z2 im Zeitbereich vor, welche über eine 2-Punkt diskrete Fouriertransformation in die beiden komplexen Symbole p1, p2 im Frequenzbereich umgewandelt werden, wobei gilt:

$$p1 = z1 + z2 \quad \text{und} \quad p2 = z1 - z2.$$

Die komplexen Symbole p1 und p2 werden im Anschluss durch eine inverse Fast Fouriertransformation in den Zeitbereich umgewandelt und versendet.

Um zu gewährleisten, dass das "double tone" Signal möglichst zuverlässig im Empfänger detektiert und die Wahrscheinlichkeit für eine "missed detection" reduziert werden kann, ist es vorteilhaft, wenn die Absolutwerte von p1 und p2 im Frequenzbereich gleich groß sind, da dann die Finger für die inverse diskrete Fouriertransformation im Empfänger mit geringer Fehlerwahrscheinlichkeit eingestellt werden können. Um die Gleichheit der Beträge zu erreichen,

muss gelten: $x1 \cdot x2 = -y1 \cdot y2$ mit x1 dem Realteil von z1, y1 dem Imaginärteil von z1, x2 dem Realteil von z2, und y2 dem Imaginärteil von z2. Ist z1 beispielsweise gleich 1, d.h. x1 = 1 und y1 = 0, dann muss $x2$ = 0 sein und y2 kann beliebig gewählt werden.

Um weiterhin ein erwünschtes niedriges PAPR des übertragenen Signals zu erhalten, sollte gelten, dass die Absolutbeträge von z1 und z2 gleich sind. Ist z1 beispielsweise gleich 1, d.h. $x1$ = 1 und $y1$ = 0, so muss in diesem Fall $y2$ = $\pm 1$ sein. Insgesamt ergibt sich hieraus $z1$ = 1 und $z2$ = $\pm j$. Es sind somit zwischen den beiden Signalen die Phasenverschiebungen von π und -π möglich.

Das beschriebene Beispiel zeigt ohne Einschränkung der Allgemeinheit: wenn eines der beiden zu übertragenden Symbole bekannt bzw. festgelegt wird, und die Absolutbeträge von p1 und p2 im Frequenzbereich gleich groß sein sollen, und weiterhin die Absolutbeträge von z1 und z2 im Zeitbereich gleich groß sein sollen, kann aufgrund der zweifachen Möglichkeit für die Phasenbeziehung zwischen den beiden Signalen ein Bit Information übertragen werden.

Wie weiter oben bereits erläutert, ist es vorteilhaft, die Kodierung von Informationen in die Phasenverschiebung nur dann anzuwenden, wenn die verwendeten Subträger keinen allzu großen Abstand zueinander aufweisen. Figur 5 zeigt wie auch Figur 4 in der linken Spalte den Subträgerabstand DIST zwischen den beiden verwendeten Subträgern, und in der rechten Spalte die Phasenverschiebung PHASE zwischen den Signalen der beiden Subträger. Für die IFDMA-Übertragung werden für die Subträgerabstände DIST von 1, 2, 3 und 4 wie oben hergeleitet, genau zwei Phasenbeziehungen zugelassen, nämlich die beiden Phasen PHASE von π und - π, für die Subträgerabstände DIST von 6, 7, 8, und 9 hingegen keine Phasendifferenz. Denn wenn der Subträgerabstand DIST zwischen den beiden verwendeten Subträgern weniger als 50% Kohärenzbandbreite beträgt, kann die Phasenverschiebung zwischen z1 und z2 empfängerseitig leicht detektiert werden. Bei einem größeren Subträgerabstand DIST hingegen trifft dies nicht mehr zwangsläufig zu.

Der Informationsgehalt IC, welcher bei Verwendung der Kodierung gem. Figur 5 übertragen werden kann, ergibt sich zu:

$$IC = \log_2\left[\left(9+8+7+6\right)\cdot 2 + \left(5+4+3+2+1\right)\cdot 1\right] \text{ Bits } = 6{,}2 \text{ Bits.}$$

Die 9 in der ersten runden Klammer korrespondiert hierbei zu dem Subträgerabstand von 1, da es 9 verschiedene Möglichkeiten der Verteilung von zwei benachbarten Subträgern auf 10 Subträger gibt. Die 9 wird mit 2 multipliziert, da 2 mögliche Phasenbeziehungen existieren. Entsprechendes gilt auch für die Subträgerabstände von 2 -korrespondierend zu der 8 in der ersten runden Klammer-, von 3 -korrespondierend zu der 7 in der ersten runden Klammer-, und von 4 -korrespondierend zu der 8 in der ersten runden Klammer. Für die größeren Subträgerabstände von 5 -korrespondierend zu der 5 in der zweiten runden Klammer-, bis 9 -korrespondierend zu der 1 in der zweiten runden Klammer-, wird keine Phasendifferenz kodiert und empfängerseitig ausgewertet, da hierfür nur die Phasendifferenz von 0 zugelassen ist.

Im folgenden wird eine Erweiterung des bisherigen IFDMA-Verfahrens beschrieben. Es kann davon abgewichen werden, dass der Betrag von z1 gleich dem Betrag von z2 sein soll. Dies entspricht einem Verzicht auf ein vorteilhaft niedriges PAPR. Um die Gleichheit der Beträge von p1 und p2 im Frequenzbereich zu gewährleisten, kann gemäß den obigen Ausführungen $z2 = j \cdot k$ mit k einer beliebigen ganzen Zahl gewählt werden. In diesem Fall sind wie oben erläutert zwei Phasendifferenzen, nämlich π und -π, möglich. Zusätzlich unterscheiden sich die Amplituden der beiden Signale, da die Amplitude des ersten x1, da z1=x1, und die des zweiten k beträgt. Durch diesen Amplitudenunterschied können weitere Informationen übertragen werden. Jede Zeile der Figur 5 kann in diesem Fall in eine Mehrzahl von Zeilen aufgespalten werden, entsprechend den verschiedenen zugelassenen Werten von k.

Gemäß der zuletzt beschriebenen Erweiterung des IFDMA-Verfahrens detektiert die Teilnehmerstation die Frequenzlage und den Frequenzabstand der für die Organisationsinformation verwendeten Subträger, sowie die Phasendifferenz zwischen den Signalen der beiden Subträger, und das Amplitudenverhältnis zwischen diesen Signalen. Aus diesen Informationen kann sie unter Verwendung einer ihr bekannten Zuordnungstabelle zellspezifische Informationen ermitteln. Während die Verwendung des Amplitudenverhältnisses zusätzliche zur Verwendung der Phasendifferenz anhand der IFDMA-Technologie erläutert wurde, ist sie nicht auf IFDMA beschränkt, sondern auch auf andere Mehrträgerübertragungsverfahren anwendbar.

Um die Wahrscheinlichkeit einer falschen Detektion zu verringern, ist es vorteilhaft, wenn nur bestimmte Subträgerabstände zugelassen werden. Bezugnehmend auf die Figuren 4 und 5, welche die Verwendung aller möglichen Subträgerabstände für zwei Subträger aufzeigen, könnten beispielsweise alle Zeilen, welche sich auf ungerade Subträgerabstände beziehen, gestrichen werden. Hierdurch sinkt allerdings die Anzahl an übertragbaren Bits.

Unter Verwendung der beschriebenen Verfahren ist es möglich, eine bestimmte Anzahl von Bits durch eine einmalige Versendung von Signalen auf mehreren Subträgern zu realisieren. Übersteigt die tatsächlich benötigte Bitanzahl diese Anzahl, so ist eine mehrfache Versendung möglich. Diese mehrfachen Versendungen können direkt aufeinander folgen, oder auch mit einem bestimmten Zeitabstand. Soll von einer Basisstation ein großes Ausmaß von zellspezifischen Informationen übertragen werden, so kann die Basisstation eine Mehrzahl von Zeitschlitzen, welche für die Versendung der Organisationsinformationen zur Verfügung stehen, nutzen, um die Gesamtheit ihrer zellspezifischen Informationen zu übertragen. Bei Verwendung von mehreren aufeinanderfolgenden Versendungen ist eine weitere Kodierung möglich, indem mit dem Phasenunterschied und/oder der relativen Frequenzlage und/oder dem Amplitudenverhältnis von Signalen aufeinanderfolgender Versendungen Informationsgehalte verknüpft werden.

Bislang wurde davon ausgegangen, dass die Organisationsinformationen auf 2 Subträgern übertragen werden. Hierbei handelt es sich jedoch lediglich um ein Beispiel, die Verwendung von größeren Mehrzahlen an Subträgern ist zusätzlich oder alternativ möglich. Beispielsweise kann festgelegt werden, dass die Organisationsinformationen auf 2, 3 oder 4 Subträgern übertragen werden. Zusätzlich zu den in den Figuren 4 oder 5 dargestellten Tabellen betreffend 2 verwendete Subträger existieren in diesem Fall zwei weitere Tabellen betreffend 3 und 4 verwendete Subträger. Hierdurch kann ein größeres Ausmaß an Informationen kodiert bzw. durch eine einmalige Versendung der Organisationsinformationen übertragen werden.

Es ist vorteilhaft, wenn eine Festlegung eines maximalen Subträgerabstandes erfolgt, welcher z.B. der Kohärenzbandbreite des Funkkanals entsprechen kann. Dies ist insbesondere vorteilhaft, wenn verschiedene Anzahlen von verwendbaren Subträgern möglich sind. Durch die Beschränkung des maximalen Subträgerabstandes ist es z.B. unwahrscheinlich, dass eine Verwendung von 3 Subträgern empfängerseitig mit einer Verwendung von 2 Subträgern verwechselt wird, da aufgrund der Nähe der Subträger i.d.R. entweder alle Subträger von einer starken Dämpfung durch schlechte Funkübertragungsbedingungen betroffen, oder keiner der Subträger. Je größer die zugelassenen Subträgerabstände sind, desto wahrscheinlicher ist es, dass teilnehmerseitig eine geringere Anzahl von Subträgern detektiert wird als senderseitig verwendet wurde, da es bei zunehmenden Subträgerabständen leichter möglich ist, dass lediglich eine Teilmenge der verwendeten Subträger sich in einem sogenannten "fading dip" befindet. In diesem Fall kann keine korrekte Dekodierung der übertragenen Informationen erfolgen.

**Patentansprüche**

1. Verfahren zur Übertragung von Informationen (ORG) von einem Sender (BS) zu einem Empfänger (MS) in einem Funkkommunikationssystem, bei dem
   ein in eine Mehrzahl von Subträgern aufgespaltetes Frequenzband (FB) zur Kommunikation verwendet wird, der Sender (BS) auf zumindest zwei Subträgern jeweils ein Signal (ORG 1, ORG 2) versendet, wobei die Informationen (ORG) derart kodiert sind, dass sie empfängerseitig unter Verwendung der Kenntnis der Frequenzlagen der zumindest zwei Subträger in Kombination mit der Kenntnis des Phasenverhältnisses zwischen den zumindest zwei Signalen (ORG 1, ORG 2) ermittelbar sind.

2. Verfahren nach Anspruch 1, bei dem
   die Informationen (ORG) derart kodiert sind, dass sie empfängerseitig unter Verwendung von zusätzlich der Kenntnis des Amplitudenverhältnisses zwischen den zumindest zwei Signalen (ORG 1, ORG 2) ermittelbar sind.

3. Verfahren nach Anspruch 1 oder 2, bei dem
   die Informationen (ORG) derart kodiert sind, dass sie empfängerseitig unter Verwendung von zusätzlich der Kenntnis der Anzahl der zumindest zwei Subträger ermittelbar sind.

4. Verfahren nach einem der Ansprüche 1 bis 3, bei dem
   dem Sender (BS) zur Übertragung der Informationen (ORG) ein Teil des Frequenzbandes (FB) zur Verfügung steht, wobei die zumindest zwei Subträger eine Teilmenge des Teils des Frequenzbandes (FB) darstellen, und der Sender (BS) die nicht zur Versendung der zumindest zwei Signale (ORG 1, ORG 2) verwendeten Subträger des Teils des Frequenzbandes (FB) nicht zur Signalversendung verwendet.

5. Verfahren nach einem der Ansprüche 1 bis 4, bei dem
   das Verfahren zusätzlich von einem anderen Sender (BS) zur Versendung von anderen Informationen durchgeführt wird, wobei dem Sender (BS) zur Übertragung der Informationen (ORG) ein Teil des Frequenzbandes (FB) und dem anderen Sender (BS) zur Übertragung der anderen Informationen ein anderer Teil des Frequenzbandes (FB) zur Verfügung steht.

6. Verfahren zur Übertragung von Informationen (ORG) von einem Sender (BS) zu einem Empfänger (MS) in einem Funkkommunikationssystem, bei dem ein in eine Mehrzahl von Subträgern aufgespaltetes Frequenzband (FB) zur Kommunikation verwendet wird, der Empfänger (MS) auf zumindest zwei Subträgern jeweils ein Signal (ORG 1, ORG 2) empfängt und die Informationen (ORG) unter Verwendung der Kenntnis der Frequenzlagen der zumindest zwei Subträger in Kombination mit der Kenntnis des Phasenverhältnisses zwischen den zumindest zwei Signalen (ORG 1, ORG 2) ermittelt.

7. Verfahren nach Anspruch 6, bei dem
der Empfänger (MS) die Informationen (ORG) unter Verwendung von zusätzlich der Kenntnis des Amplitudenverhältnisses zwischen den zumindest zwei Signalen (ORG 1, ORG 2) ermittelt.

8. Verfahren nach Anspruch 6 oder 7, bei dem
der Empfänger (MS) die Informationen (ORG) unter Verwendung von zusätzlich der Kenntnis der Anzahl der zumindest zwei Subträger ermittelt.

9. Verfahren nach einem der Ansprüche 6 bis 8, bei dem
der Empfänger (MS) zumindest eines der zumindest zwei Signale (ORG 1, ORG 2) außer zur Ermittlung der Informationen (ORG) zur Zeitsynchronisation und zur Frequenzsynchronisation verwendet.

10. Verfahren nach einem der Ansprüche 1 bis 9, bei dem
Zuordnungen zwischen Frequenzlagen der zumindest zwei Subträger in Kombination mit Phasenverhältnissen zwischen den zumindest zwei Signalen (ORG 1, ORG 2) einerseits und Informationsgehalten andererseits verwendet werden.

11. Verfahren nach Anspruch 10, bei dem
bei den Zuordnungen für verschiedene Frequenzabstände zwischen den zumindest zwei Subträgern verschiedene Anzahlen von Phasenverhältnissen verwendet werden.

12. Verfahren nach Anspruch 11, bei dem
für einen ersten Frequenzabstand zwischen den zumindest zwei Subträgern eine erste Anzahl von Phasenverhältnissen verwendet wird, und für einen zweiten gegenüber dem ersten Frequenzabstand zwischen den zumindest zwei Subträgern größeren Frequenzabstand eine zweite gegenüber der ersten Anzahl kleinere Anzahl von Phasenverhältnissen verwendet wird.

13. Verfahren nach einem der Ansprüche 10 bis 12, bei dem
es sich bei der Übertragung der Informationen (ORG) um eine IFDMA-Übertragung handelt, wobei bei den Zuordnungen zumindest für manche Frequenzabstände zwischen den zumindest zwei Subträgern genau zwei mögliche Phasenverhältnisse verwendet werden.

14. Verfahren nach einem der Ansprüche 10 bis 13, bei dem
bei den Zuordnungen ein maximaler Frequenzabstand zwischen den zumindest zwei Subträgern verwendet wird, welcher von Eigenschaften des Übertragungskanals zwischen Sender (BS) und Empfänger (MS) abhängt.

15. Verfahren nach einem der Ansprüche 1 bis 14, bei dem
es sich bei den Informationen (ORG) um Informationen handelt, welche der Empfänger (MS) zur Versendung von Nachrichten an den Sender (BS) und/oder zur Dekodierung von Nachrichten von dem Sender (BS) benötigt.

16. Verfahren nach einem der Ansprüche 1 bis 15, bei dem
es sich bei den zumindest zwei Signalen (ORG 1, ORG 2) jeweils um eine Schwingung konstanter Phase und Amplitude handelt.

17. Sender (BS) zur Übertragung von Informationen (ORG) zu einem Empfänger (MS) in einem Funkkommunikationssystem, mit
Mitteln zum Verwenden von Subträgern eines in eine Mehrzahl von Subträgern aufgespalteten Frequenzbandes (FB) zur Kommunikation,
Mitteln zum Versenden auf zumindest zwei Subträgern von jeweils einem Signal (ORG 1, ORG 2),
Mitteln zum Kodieren der Informationen (ORG) derart, dass sie empfängerseitig unter Verwendung der Kenntnis der Frequenzlagen der zumindest zwei Subträger in Kombination mit der Kenntnis des Phasenverhältnisses zwischen den zumindest zwei Signalen (ORG 1, ORG 2) ermittelbar sind.

18. Empfänger (MS) zum Empfangen von Informationen (ORG) von einem Sender (BS) in einem Funkkommunikationssystem, mit Mitteln zum Verwenden von Subträgern eines in eine Mehrzahl von Subträgern aufgespalteten Frequenzbandes (FB) zur Kommunikation,

Mitteln zum Empfangen auf zumindest zwei Subträgern von jeweils einem Signal (ORG 1, ORG 2),
Mitteln zum Ermitteln der Informationen (ORG) unter Verwendung der Kenntnis der Frequenzlagen der zumindest zwei Subträger in Kombination mit der Kenntnis des Phasenverhältnisses zwischen den zumindest zwei Signalen (ORG 1, ORG 2).

# FIG 1

# FIG 2A

FB

| BS1 | BS2 | BS3 | BS4 | BS5 | BS6 | BS7 |
|-----|-----|-----|-----|-----|-----|-----|

# FIG 2B

FB

| BS1 | BS2 | BS3 | BS4 | BS5 | BS6 | BS7 | |
|-----|-----|-----|-----|-----|-----|-----|--|

# FIG 3

1  2  3  4  5  6  7  8  9  10

ORG 1

ORG 2

# FIG 5

| DIST | PHASE |
|------|-------|
| 1 | $\pi$ |
| 1 | $-\pi$ |
| 2 | $\pi$ |
| 2 | $-\pi$ |
| 3 | $\pi$ |
| 3 | $-\pi$ |
| 4 | $\pi$ |
| 4 | $-\pi$ |
| 5 | 0 |
| 6 | 0 |
| 7 | 0 |
| 8 | 0 |
| 9 | 0 |

# FIG 4

| DIST | PHASE |
|------|-------|
| 1 | 0 |
| 1 | $\pi/2$ |
| 1 | $\pi$ |
| 1 | $3\pi/2$ |
| 2 | 0 |
| 2 | $\pi/2$ |
| 2 | $\pi$ |
| 2 | $3\pi/2$ |
| 3 | 0 |
| 3 | $\pi/2$ |
| 3 | $\pi$ |
| 3 | $3\pi/2$ |
| 4 | 0 |
| 4 | $\pi$ |
| 5 | 0 |
| 5 | $\pi$ |
| 6 | 0 |
| 6 | $\pi$ |
| 7 | 0 |
| 8 | 0 |
| 9 | 0 |

Europäisches
Patentamt

**EUROPÄISCHER RECHERCHENBERICHT**

Nummer der Anmeldung

EP 05 02 1717

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | TANNO M ET AL: "Experiments on three-step fast cell search algorithm employing common pilot channel for OFCDM broadband packet wireless access in forward link" VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, 26. September 2004 (2004-09-26), Seiten 968-973, XP010786766 ISBN: 0-7803-8521-7 * Zusammenfassung * * Seite 968, linke Spalte, Absatz 2 - rechte Spalte, Absatz 2 * * Seite 969, linke Spalte, Absatz 2 * * Abbildung 4a * ----- | 1-11,13, 15-18 | H04L27/30 |
| X | EP 1 542 384 A (FUJITSU LIMITED) 15. Juni 2005 (2005-06-15) * Absatz [0002] * * Absatz [0016] * * Absatz [0033] * ----- | 1-3,6-9, 17,18 | |
| | | | **RECHERCHIERTE SACHGEBIETE (IPC)** |
| A | WANG, Y-P ET AL.: "Cell search in W-CDMA" IEEE JOURNAL ON SELECTED AREAS IN COMMUNICATIONS, Bd. 18, Nr. 8, 1. August 2000 (2000-08-01), Seiten 1470-1482, XP002375710 * Zusammenfassung * * Seite 1471, rechte Spalte, Absatz 1 * * Seite 1472, linke Spalte, Absatz 2 * ----- | 1,6,17, 18 | H04L H04J |
| A | EP 1 202 484 A (MATSUSHITA ELECTRIC INDUSTRIAL CO., LTD) 2. Mai 2002 (2002-05-02) * Zusammenfassung * ----- | 1,6,17, 18 | |

Der vorliegende Recherchenbericht wurde für alle Patentansprüche erstellt

| Recherchenort | Abschlußdatum der Recherche | Prüfer |
|---|---|---|
| Den Haag | 4. April 2006 | Litton, R |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 05 02 1717

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-04-2006

| Im Recherchenbericht angeführtes Patentdokument | | Datum der Veröffentlichung | Mitglied(er) der Patentfamilie | | Datum der Veröffentlichung |
|---|---|---|---|---|---|
| EP 1542384 | A | 15-06-2005 | WO | 2004021616 A1 | 11-03-2004 |
| EP 1202484 | A | 02-05-2002 | AU | 6426601 A | 24-12-2001 |
| | | | CN | 1383641 A | 04-12-2002 |
| | | | WO | 0197422 A1 | 20-12-2001 |
| | | | JP | 3464642 B2 | 10-11-2003 |
| | | | JP | 2001358612 A | 26-12-2001 |
| | | | US | 2002122557 A1 | 05-09-2002 |

EPO FORM P0461

Für nähere Einzelheiten zu diesem Anhang : siehe Amtsblatt des Europäischen Patentamts, Nr.12/82